# EUROPÄISCHE PATENTSCHRIFT

(11) **EP 2 237 990 B1**
(45) Veröffentlichungstag und Bekanntmachung des Hinweises auf die Patenterteilung: **20.02.2013**
(21) Anmeldenummer: 08863246.8
(22) Anmeldetag: 08.12.2008
(51) Int. Cl.: B60R 7/02, B60R 7/08

(54) **AUFHÄNGESYSTEM FÜR DEN LADERAUM EINES FAHRZEUGES**
SUSPENSION SYSTEM FOR THE CARGO SPACE OF A VEHICLE
SYSTÈME DE SUSPENSION POUR LE COMPARTIMENT DE CHARGEMENT D'UN VÉHICULE

(30) Priorität: 19.12.2007 CZ 20070889
(43) Veröffentlichungstag der Anmeldung: 13.10.2010
(73) Patentinhaber: Skoda Auto A.S., 293 60 Mladá Boleslav (CZ)
(72) Erfinder: BEDNAR, Pavel, 549 01 Nove Mesto nad Metuji (CZ)
(86) Internationale Anmeldenummer: PCT/CZ2008/000145
(87) Internationale Veröffentlichungsnummer: WO 2009/076915

(56) Entgegenhaltungen:
- EP-A- 0 972 681
- EP-A- 1 724 156
- CA-A1- 2 268 240
- DE-A1- 10 349 936

## Beschreibung

### Technisches Gebiet

Die Erfindung betrifft ein Aufhängesystem angebracht im Laderaum eines Fahrzeugs und es besteht aus einer Führungsstange und einem verschiebbaren Teil.

### Bisheriger Stand der Technik

Gegenwärtig werden gängig verschiedene Systeme zur Sicherstellung der Position der verschiebbaren Teile auf der Führungsstange verwendet. Der Großteil der Systeme ist kompliziert in der Notwendigkeit der Anwendung weiterer Sicherungsteile, welche meistens Teil der Konstruktion sind. Weiter werden Systeme mit Formsicherungen verwendet, die jedoch keine einfache Positionsänderung ohne die Notwendigkeit eines Herausnehmens, einer Entsicherung oder der Lockerung weiterer Sicherungselemente ermöglichen.

Ein weiteres System (DE10349936) verwendet eine Lösung bei der ein Befestigungselement in einer Führung befestigt ist, die Bestandteil der Kofferraumabdeckung ist. Hier wird das Befestigungselement in eine Nut eingeführt, wobei der tragende Teil des Befestigungselements, der in die Nut eingeführt ist, eine ovale oder elliptische Form aufweist und mit einem Elastomer überzogen ist.

Der Nachteil dieser Lösungen ist auch das Aussehen der Teile. Die Teile müssen gegeneinander so geformt sein, dass es zu einer zuverlässigen Teileverbindung kommt und dieses vor allem seitens des ausschauenden Teils. Dieses beeinflusst direkt das Teiledesign (Leiste, Öffnungen, Pressform...).

Weitere Nachteile dieser Lösungen sind mit dem Händling verbunden. Das Einfädeln des positionierbaren Teils erfordert eine komplizierte Bewegung, die eine Nutzung schwieriger macht. Zur korrekten Sicherung der verschiebbaren Teile ist es notwendig, bei einigen Lösungen eine Konstruktion mehrerer Teile zu verwenden (Schrauben, Federn, verschiedene Gleitschutzteile oder Anpassungen...).

Ein Aufhängesystem gemäß dem Oberbegriff des Anspruchs 1 ist auch aus der EP1724156A1 und der CA2268240A1 bekannt.

### Darstellung der Erfindung

Die aufgeführten Unzulänglichkeiten beseitigt ein Aufhängesystem mit den Merkmalen des Anspruchs 1. Die Darstellung der Erfindung basiert darin, dass hier die Mittigkeit aller dieser Flächen eingehalten wird, damit es möglich ist, das verschiebbare Teil auf den Zylinderflächen zu drehen und es parallel auf diesen Flächen in bestimmter, hierzu definierter Position zu verschieben.

Weiter umfasst die Führungsstange Rippen und das verschiebbare Teil umfasst einen Zentrierzahn, wobei diese Rippen und der Zentrierzahn zur Sicherung gegen eine Verschiebung auf der Führungsstange unerlässlich sind.

Der Auslauf, angebracht an der unteren Funktionsseite des verschiebbaren Teils, und die Rille der Führungsstange ermöglichen es, in bestimmter Position nach der Überwindung eines geringfügigen Widerstands dieses verschiebbare Teil von der Führungsstange zu entnehmen.

Der Auslauf des verschiebbaren Teils in bestimmter Position, wenn dieser in die Kerbe der Führungsstange einklinkt, ermöglicht die Verschiebung des verschiebbaren Teils auf der Führungsstange.

Das verschiebbare Teil erlaubt auf der Führungsstange drei Positionen. In der Grundposition ist das Teil eindeutig eingestellt und gegen eine Bewegung in der Achse X, Y fixiert - d.h. es befindet sich in der Funktionsposition. In der zweiten Position ist das Teil in senkrechter Position gegenüber der Grundposition eingestellt und zwar so, dass es bei der Anwendung im Laderaum nicht in diesen Raum hineinragt. In der dritten Position ist das Teil in einer beliebigen Position in der Verschieberichtung auf der Stange einstellbar.

### Übersicht der Figuren der Zeichnungen

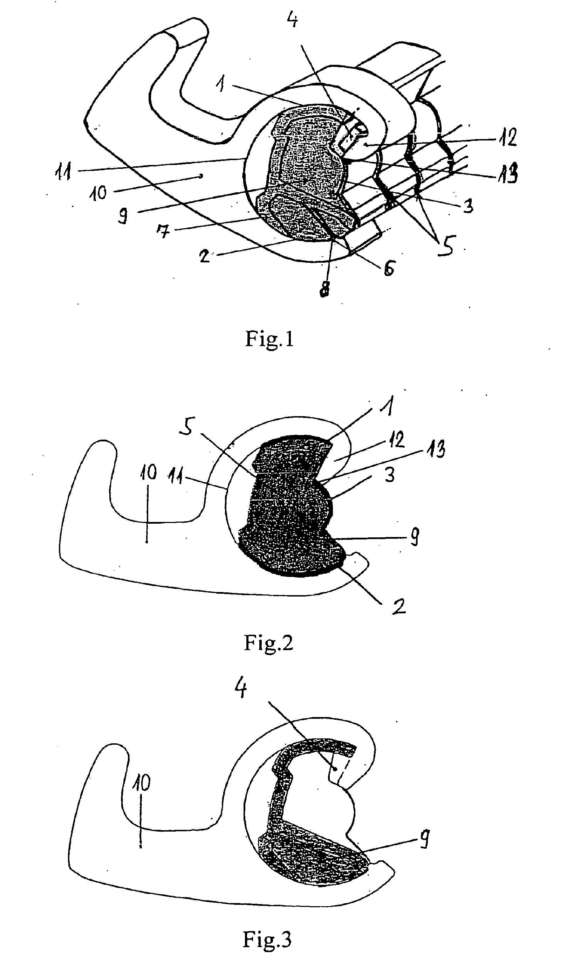

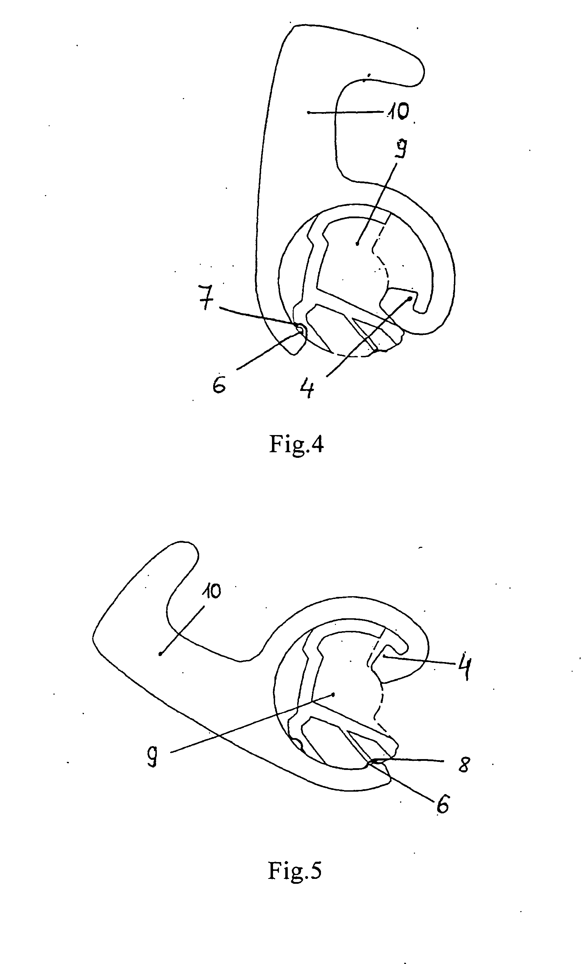

In der Fig. 1 befindet sich die Darstellung des Aufhängesystems für den Laderaum eines Fahrzeugs in axonometrischer Ansicht, in der Fig. 2 in der Seitenansicht im Querschnitt durch die Rippe der Führungsstange in der Grundposition A, in der Fig. 3 in derselben Position, jedoch im Querschnitt im Bereich zwischen den Rippen, in der Fig. 4 in der Seitenansicht in der Position B (der Haken befindet sich in gehobener Position) und in der Fig. 5 in der Seitenansicht in der Position C (verschiebbare Hakenposition).

### Ausführungsbeispiel der Erfindung

In der Fig. 1 ist das Aufhängesystems für den Laderaum eines Fahrzeugs zusammengesetzt aus zwei Teilen und dieses sind die Führungsstange 9 und das verschiebbare Teil 10. Die Führungsstange 9 ist ein Kunststoff-, Metall-, oder Holzteil, rückseitig mit Rippen 5 versehen. Weitere wichtige Teile der Führungsstange 9 sind deren Funktionsflächen und dieses ist die obere Zylinderfläche 1, die untere Zylinderfläche 2 und auch die mittlere Zylinderfläche 3, wobei alle Zylinderflächen einen mittigen Charakter haben. Die Führungsstange 9 umfasst weiter eine Sicherungsrille 7 und die Kerbe 8.

Das verschiebbare Teil 10, welches hier als ein Haken ausgebildet wird, umfasst einen Auslauf 6, eine innere Zylinderfläche 11 und einen oberen Abschlussteil 12 . Der obere Abschlussteil 12 umfasst die Kontaktfläche 13. Die innere Zylinderfläche 11 und die Kontaktfläche 13 des oberen Abschlussteils 12 weisen ebenfalls einen mittigen Charakter auf, damit eine Drehbewegung des verschiebbaren Teils 10 auf den Zylinderflächen 1, 2, und 3 ermöglicht wird. Das bedeutet, das die innere Zylinderfläche 11 des verschiebbaren Teils 10 sich drehbar auf der oberen Zylinderfläche 1 und auf der unteren Zylinderfläche 2 der Führungsstange 9 und gleichzeitig die Kontaktfläche 13 des oberen Abschlussteils 12 des verschiebbaren Teils 10 sich drehbar auf der mittleren Zylinderfläche 3 der Führungsstange 9 bewegt.

Das verschiebbare Teil 10 nimmt auf der Führungsstange 9 die Positionen A, B und C ein.

Die Position A, die Grundposition des verschiebbaren Teils 10, nach der Fig. 2 und 3, ist eine Funktionsposition, wo das verschiebbare Teil 10 (Haken) eindeutig mit dem Zentrierzahn 4 zwischen die Rippen 5 rückseitig auf der Führungsstange 9 eingeschoben eingestellt ist. Diese Rippen 5 und der Zentrierzahn 4 sind nötig zur Sicherung des verschiebbaren Teils 10 gegen eine Verschiebungsbewegung auf der Führungsstange 9, d.h. es kann nicht verschoben werden.

Die Position B, das verschiebbare Teil 10 in gehobener Position, nach der Fig. 4, ist die Position, in der das verschiebbare Teil 10 (Haken) in der oberen Position stabilisiert ist und es nicht möglich ist dieses zu verschieben. Es ist möglich, dieses in dieser Position von der Führungsstange 9 nach der Überwindung eines minimalen Widerstands zu entnehmen. Diese Position ermöglicht, das verschiebbare Teil 10 so wegzuräumen, dass es nicht im Raum im Wege steht, oder dieses von der Führungsstange 9 zu entnehmen. Auf der unteren Funktionsseite des verschiebbaren Teils 10 befindet sich der Auslauf 6 und am Rand der unteren Zylinderfläche 2 der Führungsstange 9 befindet sich die Rille 7, welche diese Position ermöglichen. In dieser Position ist der Zentrierzahn 4 zwischen die Rippen 5 der hinteren Seite der Führungsstange 9 nicht eingeschoben.

Die Position C, die Schiebeposition des verschiebbaren Teils 10 (Haken), nach der Fig. 5, ist die Position, die eine freie Verschiebung des verschiebbaren Teils 10 auf der Führungsstange 9 ermöglicht. Es ist die Zwischenposition, die eindeutig festgelegt ist, gleichsam wie bei der Position B, durch den Auslauf 6 des verschiebbaren Teils 10, welcher beim Verschwenken in die Kerbe 8 der Führungsstange 9 einschnappt, und damit ist das verschiebbare Teil 10 gerade in dieser Position, welche eine Verschiebung ermöglicht , festgestellt. In dieser Position ist ebenfalls der Zentrierzahn 4 zwischen die Rippen 5 der hinteren Seite der Führungsstange 9 nicht eingeschoben.

Bei dieser Lösung des Aufhängesystems im Laderaum eines Fahrzeugs wird die Mittigkeit der Zylinderflächen eingehalten, damit es möglich ist, das verschiebbare Teil 10 auf den Zylinderflächen zu drehen und gleichzeitig dieses auf den Flächen in der Position C zu verschieben. Diese Geometrie ist für die Funktion das Wichtigste. Diese ermöglicht die Einstellung des verschiebbaren Teils 10 auf der Führungsstange 9, die Verschiebung auf der Führungsstange 9 und gleichzeitig die Möglichkeit der Sicherung in der Position A.

Die Führungsstange 9 kann auf der Sichtseite teilweise laut den Anforderungen des Designs geformt werden. Bedingung ist die Beibehaltung der kreisförmigen Funktionsgeometrie der Führungsstange 9 und der Feststellrippen 5 auf der Rückseite. Beim verschiebbaren Teil 10 muss die kreisförmige Funktionsgeometrie beibehalten werden, zu der es möglich ist, ein beliebiges Funktionselement (nicht konstruktiv) zuzuordnen. Als Grundausführung wurde über einen positionierbaren Haken nachgedacht.

Bestandteil der Führungsstange 9 sind die Verankerungsstellen zur Anwendung im Fahrzeug (nicht dargestellt). Diese Verankerungsstellen begrenzen nicht die Funktion des verschiebbaren Teils.

### Gewerbliche Anwendbarkeit

Das Aufhängesystem des Fahrzeugs nach der Erfindung kann in allen Fahrzeugen benutzt werden und es kann vorteilhafterweise zum Beispiel an die Seitenwände des Laderaums angebracht werden.

### Bezugszeichenliste

- 1: Obere Zylinderfläche der Führungsstange
- 2: Untere Zylinderfläche der Führungsstange
- 3: Mittlere Zylinderfläche der Führungsstange
- 4: Zentrierzahn des verschiebbaren Teils
- 5: Rippe der Führungsstange
- 6: Auslauf des verschiebbaren Teils
- 7: Sicherungsrille der Führungsstange
- 8: Kerbe der Führungsstange
- 9: Führungsstange
- 10: Verschiebbares Teil
- 11: Innere Zylinderfläche des verschiebbaren Teils
- 12: Oberes Abschlussteil des verschiebbaren Teils
- 13: Kontaktfläche des oberen Abschlussteils des verschiebbaren Teils

## Patentansprüche

1. Aufhängesystem im Laderaum eines Fahrzeugs, bestehend aus einer Führungsstange (9) und, auf dieser am Umfang angebracht, einem verschiebbaren Teil (10), **dadurch gekennzeichnet, dass**
- die Führungsstange (9) eine obere (1), untere (2) und mittlere Zylinderfläche (3) umfasst und
- das verschiebbare Teil (10) eine innere Zylinderfläche (11) und eine Kontaktfläche (13) eines oberen Abschlussteils (12) umfasst,
- wobei diese Flächen (1, 2, 3, 11, 13) jeweils eine kreisabschnittsförmige Querschnittgeometrie um einen gemeinsamen Mittelpunkt herum aufweisen, damit eine Drehbewegung des verschiebbaren Teils (10) auf den Zylinderflächen (1, 2, 3) der Führungsstange (9) ermöglicht wird.

2. Aufhängesystem nach Anspruch 1 **dadurch gekennzeichnet, dass** die Führungsstange (9) zumindest eine Rippe (5) und das verschiebbare Teil (10) zumindest einen Zentrierzahn (4) umfasst.

3. Aufhängesystem nach einem der vorherigen Ansprüche **dadurch gekennzeichnet, dass** die Führungsstange (9) eine Sicherungsrille (7) und das verschiebbare Teil (10) einen Auslauf (6) umfasst.

4. Aufhängesystem nach einem der vorherigen Ansprüche **dadurch gekennzeichnet, dass** die Führungsstange (9) eine Kerbe (8) umfasst.

## Claims

1. Suspension system for the cargo space of a vehicle, consisting of a guide rod (9) and a movable part (10) mounted on the circumference of the latter, **characterized in that**
- the guide rod (9) comprises an upper cylinder surface (1), a lower cylinder surface (2) and a central cylinder surface (3), and
- the movable part (10) comprises an inner cylinder surface (11) and a contact surface (13) of an upper end part (12),
- wherein said surfaces (1, 2, 3, 11, 13) each have a cross-sectional geometry in the form of a section of a circle around a common centre point so that the movable part (10) can rotate on the cylinder surfaces (1, 2, 3) of the guide rod (9).

2. Suspension system according to Claim 1, **characterized in that** the guide rod (9) comprises at least one rib (5) and the movable part (10) comprises at least one centring tooth (4).

3. Suspension system according to one of the preceding claims, **characterized in that** the guide rod (9) comprises a securing groove (7) and the movable part (10) comprises an outlet (6).

4. Suspension system according to one of the preceding claims, **characterized in that** the guide rod (9) comprises a notch (8).

## Revendications

1. Système de suspension dans l'espace de chargement d'un véhicule, constitué d'une barre de guidage (9) et d'une partie coulissante (10) montée sur celle-ci sur son pourtour,
**caractérisé en ce que**
- la barre de guidage (9) comprend une surface cylindrique supérieure (1), infériere (2) et centrale (3), et
- la partie coulissante (10) comprend une surface cylindrique intérieure (11) et une surface de contact (13) comprend une partie de terminaison supérieure (12),
- ces surfaces (1, 2, 3, 11, 13) présentant à chaque fois une géométrie en section transversale en forme de section de cercle autour d'un centre commun, afin de permettre un mouvement de rotation de la partie coulissante (10) sur les surfaces cylindriques (1, 2, 3) de la barre de guidage (9).

2. Système de suspension selon la revendication 1, **caractérisé en ce que** la barre de guidage (9) comprend au moins une nervure (5) et la partie coulissante (10) comprend au moins une dent de centrage (4).

3. Système de suspension selon l'une quelconque des revendications précédentes, **caractérisé en ce que** la barre de guidage (9) comprend une rainure de fixation (7) et la partie coulissante (10) comprend une partie de sortie (6).

4. Système de suspension selon l'une quelconque des revendications précédentes, **caractérisé en ce que** la barre de guidage (9) comprend une encoche (8).
